# EUROPEAN PATENT APPLICATION

(11) **EP 3 059 604 A1**
(43) Date of publication of application: **24.08.2016**
(21) Application number: 16156182.4
(22) Date of filing: 17.02.2016
(51) Int. Cl.: G01S 5/02, G01S 5/00

(54) **SYSTEM AND METHOD FOR IDENTIFICATION AND LOCALISATION OF PHYSICAL OBJECTS**

(30) Priority: 18.02.2015 DK 201500097
(71) Applicant: Mobisoft ApS, 8722 Hedensted (DK)
(72) Inventor: Meldgaard Keit, Klaus, 8723 Løsning (DK); Terpager Samsøe-Schmidt, Torben, 6760 Ribe (DK); Holm Sørensen, Jon, 6760 Ribe (DK)
(74) Representative: Nielsen, Charlotte

(57) **Abstract**

A system and a method for identification and localisation of physical objects including their geographic position are disclosed. The system comprises a plurality of transmitter members integrated in or configured to be attached to the physical objects. The transmitters are configured to transmit wireless signals comprising information. The system comprises a plurality of receiver members configured to receive the wireless signals transmitted by the transmitter members. The receiver members are configured to forward the received signals directly or indirectly to a main receiver. The system is configured to allow the main receiver to access the data of all the transmitter members and receiver members allocated to the main receiver in such a manner that the main receiver has access to the time and position history of the transmitter members and the receiver members allocated to the main receiver.

## Description

### Field of invention

The present invention relates to a system and a method for identification and localisation of physical objects (objects, individuals or animals). The present invention also relates to a system and a method to access information of the history of the position of the physical objects as a function of time as well as information about individuals who have been near the physical objects.

### Prior art

In the craftsman area, most tasks involve application of working tools. Companies that use "common tools" which are accessible for several users experience that a lot of the working tools disappear without anyone knowing who used the working tools the last time they were used.

When physical objects such as tools are handled by different personnel, it is often difficult to identify the person who used the working tools the last time it was used or moved and to hold that person accountable. When working tools are passed along from one person to another, it is in particular difficult to document where and when the working tools were passed along, especially if it turns out later on that the working tools are missing.

The most severe problems arise for companies using "common working tools" that are either very expensive or used very rarely. A lot of time and resources are wasted for companies and institutions trying to identify the location of physical objects. One problem is that the "common working tools" are not used by a single user but by a plurality of users. Accordingly, it is a challenge to determine who used the working tools the last time they were used.

Therefore, it would be desirable to have a system capable of keeping track of physical objects including identifying their position. Furthermore, it would be desirable to have a system that can be used to determine the individual(s) that have been using a physical object (e.g. a working tool) the last time it was used.

It is known to use solutions based on Radio Frequency Identification (RFID) technology. These solutions are, however, expensive and are not capable of communicating in the desired range (the distance between the transmitters and the receivers).

It is further known to apply systems which require that the transmitters and the receivers are paired. The required pairing makes these solutions inconvenient and less attractive to use.

Other known systems are suitable for determining the position history of a single object or several objects linked to a single smartphone. Accordingly, these systems do not provide a suitable solution for companies or institutions having a plurality of users and physical objects as these companies or institutions need to have access to all data of all users in an easy manner.

Accordingly, it is an object of the present invention to provide a system and a method for identification and localisation of physical objects suitable for companies or institutions having a plurality of users and physical objects.

It is also an object of the present invention to provide a system and a method capable of determining which individual(s) have been using a physical object the last time it was used, accessed or located within a predefined distance from one of the said individuals.

### Summary of the invention

The object of the present invention can be achieved by a system as defined in claim 1 and by a method as defined in claim 14. Preferred embodiments are defined in the dependent sub claims, explained in the following description and illustrated in the accompanying drawings.

The system according to the invention is a system for identification and localisation of physical objects, including the geographic position of the physical objects, wherein the system comprises a plurality of transmitter members integrated in or configured to be attached to the physical objects, wherein the transmitter members are configured to transmit wireless signals comprising information about the transmitter members, wherein the system comprises a plurality of receiver members configured to receive the wireless signals transmitted by the transmitter members, wherein the receiver members are configured to forward the received wireless signals directly or indirectly to a main receiver, wherein the transmitter members regularly transmit wireless signals to the receiver members and the receiver members regularly transmit directly or indirectly to the main receiver, wherein the data transmitted by the receiver members contain information about where and when the wireless signals were received by the receiver members, wherein the system is configured to allow the main receiver to access the data of all the transmitter members allocated to the main receiver and the receiver members allocated to the main receiver in such a manner that the main receiver has access to the time and position history of the transmitter members and the receiver members allocated to the main receiver.

Hereby, it is possible to provide a system that is suitable to use for companies or institutions having a plurality of users and physical objects, wherein the companies or institutions need to access all information in a simple manner. The system makes it possible to identify the individual(s) who have been using a physical object the last time it was used, accessed or located within a predefined distance from this/these individuals. The system is less expensive and simpler than the previously known systems. The system can be used for identification and localisation of working tools, vehicles, individuals, animals or other objects.

The system comprises a plurality of transmitter members integrated in or configured to be attached to the physical objects. Hereby, the transmitter members "follow" the physical objects and thus the position of a transmitter member corresponds to the position of the corresponding physical object.

It is possible to apply various communication technologies. It is, however, preferred that the communications protocol has a low energy consumption. Hereby, the transmitter members can be energised by a standard battery and still be functional for long periods, such as several years.

It is possible to apply the technology referred to as "Bluetooth low energy", which is also called "Bluetooth Smart". The advantage of this technology is that the energy consumption and the cost of the transmitter members (chips) are significantly reduced in comparison with other communication technologies with similar range. In principle, any other suitable communications protocol may be used.

The system comprises a plurality of receiver members configured to receive the wireless signals transmitted by the transmitter members. The receiver members may be smartphones or other devices capable of receiving the signals transmitted by the transmitter members and of forwarding these data directly or indirectly to a main receiver, preferably via a central server.

The main receiver may be a company or an institution by way of example. The main receiver may access the data via a web page through the Internet or via an electrical device (e.g. a smartphone, tablet or computer receiving data from the telephone network or from the Internet).

The transmitter members transmit wireless signals to the receiver members on a regular basis. The receiver members regularly transmit directly or indirectly to the main receiver, wherein the data transmitted by the receiver members contain information about where and when the wireless signals were received by the receiver members. Hereby, it is possible to be updated about the position history of the physical objects on a continuous basis.

It is important that the system is configured to allow the main receiver to access the data of all the transmitter members allocated to the main receiver and the receiver members allocated to the main receiver in such a manner that the main receiver has access to the time and position history of the transmitter members allocated to the main receiver and the receiver members allocated to the main receiver.

The transmitter members allocated to the main receiver are the transmitter members that are linked to the relevant main receiver. The receiver members allocated to the main receiver are the receiver members that are linked to the relevant main receiver. Accordingly, the system ensures that the main receiver (e.g. a company or an institution) having a plurality of users and physical objects has access to all the data of all users in an easy manner.

It may be beneficial that the receiver members are configured to forward the received wireless signals directly and indirectly to a main receiver.

Hereby, data can be accessed by a main receiver simultaneously being a receiver member.

It may be advantageous that the system is configured to change the number of transmitter members and receiver members allocated to the main receiver by adding or removing transmitter members allocated to the main receiver and/or adding or removing receiver members allocated to the main receiver. Hereby, a flexible and user-friendly system configured to adapt to user specific charges can be provided.

It may be an advantage that the receiver members are configured to forward the received wireless signals directly and indirectly to a main receiver being a receiver member. Hereby, the users (carrying the receiver members) are capable of accessing the information about the physical objects. This allows the physical objects to be located by the users (carrying the receiver members).

It may be an advantage that the receiver members are configured to scan for signals transmitted by transmitter members in the surroundings automatically in order to be capable of receiving signals transmitted by the transmitter members. It may be an advantage that this scanning procedure is continued. Scanning may preferably be provided in an intermittent manner, in such a way that the scanning periods are separated by breaks having a predefined duration.

Each transmitter member may preferably, as a part of the signal that it transmits, contain its Media Access Control (MAC) address (which is a unique address). The transmitted signals may contain other information such as battery status.

It may be advantageous that the system is configured to identify if one or more of the receiving members are within a predefined distance from the transmitter members. Hereby, it is possible to monitor and make sure that the distance between the receiving members and the transmitter members does not exceed a predefined quantity/level. The signal strength may be used as a measure/estimate of the distance between the receiving members and the transmitter members.

It may be an advantage that the system is configured to generate an alert in case that one or more of the receiving members are within a predefined distance from the transmitter members and/or that the signal strength of the received signals transmitted by the transmitting members are within a predefined range.

Hereby, the alert can be used to warn/inform staff or personnel if the distance between the receiving members and the transmitter members exceeds a predefined level or if the signal strength is below a predefined level.

It may be beneficial that the system is configured to identify if several of the receiving members are simultaneously within a predefined distance from the transmitter members or if the signal strength of the transmitted signals is within a predefined range. This feature may be used if missing individuals are to be located.

It may be advantageous that the system is configured to save data and thereby identify the receiver members which have recently been near the transmitter members. Data may be saved on any suitable storage means. It is possible to save the data on a central server that can be accessed by the main receiver (e.g. company or institution) using the system. Data may alternatively be saved on one or more computers.

It may be an advantage that the system comprises means for generating an alert in case no signal has been registered by a receiver member within a predefined time period (e.g. one day, two days, one week, two weeks or a month). Hereby, it is possible to automatically detect when a device is missing or is not used. Thus, it is possible to replace the lost device with another one or to confront the individual who used the working tool the last time it was used in order to get an explanation.

It may be an advantage that the system is configured to register users using their mobile phone (smartphone) as receiver member. Each user may be registered with name, telephone number and the company, institution or organisation they belong to. Hereby, it is possible to differentiate between different receiver members and perform a sorting procedure in order to give access to the correct main receivers.

It may be beneficial that the system is configured to sort out non-related or non-linked data so that a main receiver only has access to data to which the main receiver is related or linked. Accordingly, the system makes it possible for several applicants to use the system at the same place (e.g. on the same construction site) without risking that the signals mix up resulting in that the signals interfere with one another in a negative manner.

It may be beneficial that the system is configured to add and/or remove receiver members and/or transmitter members and/or main receivers.

It may be an advantage that the receiver members comprise a satellite-based navigation and positioning system receiver (GPS receiver) for determining the position of the receiver members. Hereby, the receiver members can be used to estimate the position of the transmitter members.

It may be advantageous that the system does not require the transmitter members and receiver members to be paired. This can be accomplished by selecting a communications protocol that does not require the transmitter members and receiver members to be paired. Accordingly, a simple and user-friendly system can be provided.

It may be beneficial that each transmitter member comprises a unique identification code corresponding to the MAC address of the transmitter member.

The object of the present invention can be achieved by a method for identification and localisation of physical objects, including the geographic position of the physical objects, wherein the method applies a plurality of transmitter members integrated in or configured to be attached to the physical objects, wherein the transmitter members are configured to transmit wireless signals comprising information about the transmitter members, wherein the method applies a plurality of receiver members configured to receive the wireless signals transmitted by the transmitter members, wherein the receiver members are configured to forward the received wireless signals directly or indirectly to a main receiver, wherein the transmitter members regularly transmit wireless signals to the receiver members and that the receiver members regularly transmit directly or indirectly to the main receiver, wherein the data transmitted by the receiver members contain information about where and when the wireless signals were received by the receiver members, wherein the method provides a main receiver to access the data of all the transmitter members and the receiver members allocated to the main receiver in such a manner that the main receiver has access to the time and position history of the transmitter members and receiver members allocated to the main receiver.

Hereby, it is possible to provide a method that can be used by companies or institutions having a plurality of users and physical objects, wherein the companies or institutions need to access all information in a simple manner. The method makes it possible to determine which individual(s) have been using a physical object the last time it was used, accessed or located within a predefined distance from one of the said individuals. The method provides a cost-efficient way to identify and locate working tools, vehicles, individuals, animals or other objects.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic view of a system according to the invention;
- Fig. 2: shows a schematic view of a system according to the invention;
- Fig. 3: shows a schematic view of two systems according to the invention;
- Fig. 4: shows a schematic view of a system according to the invention;
- Fig. 5: shows a schematic view of a system according to the invention used in a childcare centre;
- Fig. 6 A: shows a schematic, graphical view of the sending activity of a transmitter member as function of time;
- Fig. 6 B: shows a schematic, graphical view of the scanning activity of a receiver member as function of time;
- Fig. 7 A: shows a schematic front view of a transmitter member according to the invention;
- Fig. 7 B: shows a schematic perspective view of the transmitter member shown in Fig. 7 A;
- Fig. 7 C: shows a schematic cross-sectional view of a transmitter member according to the invention;
- Fig. 8: schematically shows how data is sorted to different main users during data processing carried out by a server;
- Fig. 9: shows how transmitter members and physical objects are paired and
- Fig. 10: shows a schematic view of how data is sorted to different main users during data processing carried out by a server.

### Detailed description of the invention

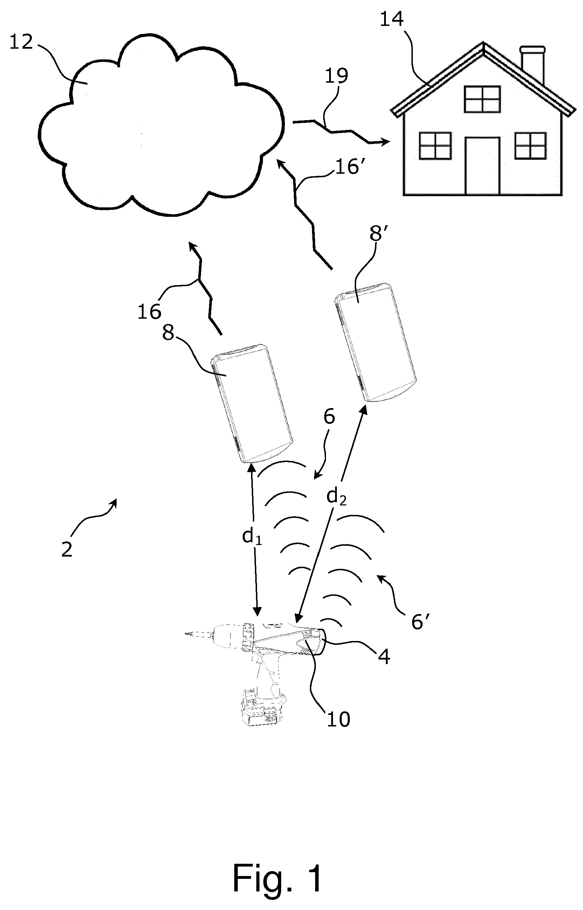

Referring now in detail to the drawings for the purpose of illustrating preferred embodiments of the present invention, a schematic view of a system 2 of the present invention is illustrated in Fig. 1.

Fig. 1 shows a schematic view of a system 2 according to the invention. The system 2 comprises several users each applying a mobile phone 8, 8'. Although not shown, the system 2 may comprise more than two users. Fig. 1 shows only two users in order to provide a simple illustration of the applied principles. The mobile phones 8, 8', that may be smartphones 8, 8', comprise means for receiving signals 6, 6' sent from a transmitter member 4 attached to a tool (a drilling machine) 10.

The transmitter member 4 is permanently attached to the drilling machine 10 in such a manner that the transmitter member 4 is moved along with the drilling machine 10. It is possible to provide a detachable attachment, wherein the transmitter member 4 is attached by means of detachable attachment means (e.g. attachment by means of a strap).

The transmitter member 4 is configured to transmit a wireless signal 6, 6' that is received and registered by the two receiver members (mobile phones) 8, 8' configured to receive the signals 6, 6'.

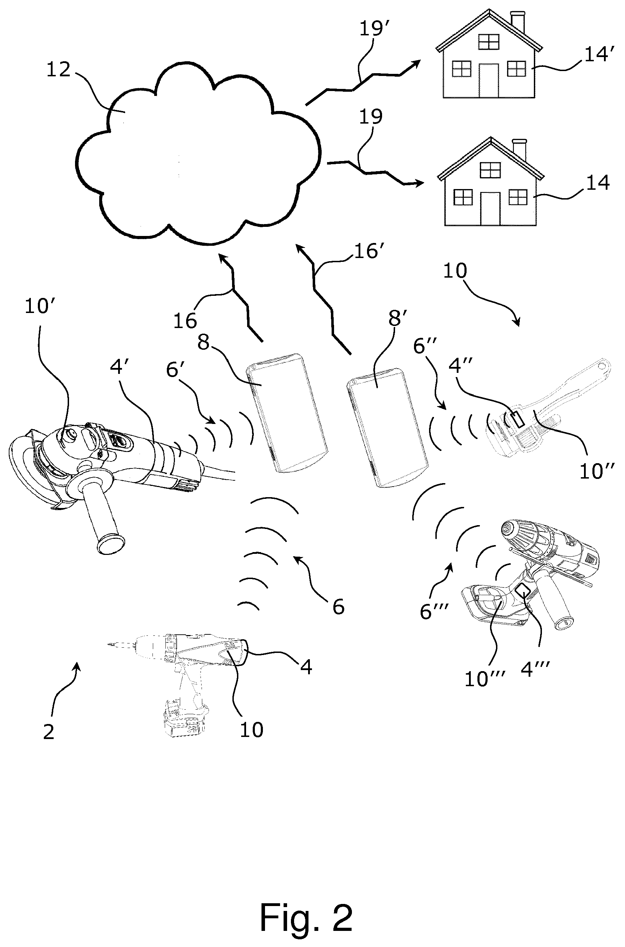

The signals 6, 6' preferably contain a unique identification code linked to the transmitter member 4. In this manner, it is possible to identify from which transmitter member 4 the signals 6, 6' originate. This is important as the system will typically comprise a large number of transmitter members 4 (see Fig. 2, Fig. 3, Fig. 5, Fig. 8 and Fig. 10).

Accordingly, it is possible for the system 2 to identify which users (carrying a smart phone) 8, 8' who are within the proximity of the physical object 10 or use the physical object 10. The system 2 also provides information about the time and the positions of the receiver members 8, 8' when the receiver members 8, 8' receive a signal 6, 6'. The system makes it possible to identify the users who have been close to a physical object 10 and where and when they were close to the physical object 10.

In the example illustrated in Fig. 1, a main receiver 14 (e.g. a company or a childcare centre) can receive data containing a signal 19 transmitted as signals 16, 16' from the receiver members 8, 8' via the Internet 12 or via another way of communication (e.g. via the telephone network).

In case the system 2 comprises several transmitter members 4, each transmitter member 4 used and defined (which means that the transmitter member 4 is specifically allocated to the main receiver 14) can be detected (there is access to the transmitted data 16, 16') by the main receiver 14.

Each transmitter member 4 preferably applies the MAC (Media Access Control) address of the transmitter member 4 as part of the transmitted signal 6, 6'. The MAC address of the transmitter member 4 is a unique address. The transmitted signal 6, 6' may contain other information e.g. battery status information.

In an embodiment according to the invention, the unique identification code of a transmitter member 4 comprises the MAC (Media Access Control) address of the transmitter member 4. In a preferred embodiment according to the invention, the unique identification code of a transmitter member 4 corresponds to the MAC address of the transmitter member 4.

The receiver members 8, 8' shown in Fig. 1 are mobile phones 8, 8' configured to receive the signals 6, 6' and determine the time and position at which the signals 6, 6' were received. The system 2 can be used to determine which user is or has recently been using the physical objects 10 and to determine the position of the physical objects 10. The system 2 can be used for identification and localisation of physical objects 10 in a simple way. It may be an advantage that the receiver members 8, 8', a server or a device (e.g. a computer device) at the main receiver 14 are configured to save and store data. The system comprises a server configured to store and save the data 16, 16' transmitted by the receiver members 8, 8'. The system 2 is configured to allow the main receiver 14 to access the data of all the transmitter members 4 allocated to the main receiver (only one is shown in Fig. 1) and the receiver members 8, 8' allocated to the main receiver in such a manner that the main receiver 14 has access to information about the time and position history of the transmitter members and the receiver members allocated to the main receiver.

The receiver members 8, 8' may detect the date (e.g. June the 24^{th}) and/or the time (e.g. 1 p.m.) and/or the geographic position detected by means of a satellite-based navigation and positioning system receiver (e.g. the Global Positioning System (GPS) receiver). This information (position) can be forwarded to the main receiver 14.

Accordingly, the system according to the invention makes it possible for the main receiver 14 to obtain knowledge about where and when the receiver members 8, 8' have been within a "predefined distance" from the transmitter members 4. The predefined distance will be defined by the communications protocol. The predefined distance depends on the signal strength that may vary dependent on the technology applied and the characteristics of the surroundings (the environment) in which the system 2 is used.

In air, large signal strength (measured as the magnitude of the electric field at a reference point at a significant distance from the transmitting antenna) will be expected. However, if the signals 6, 6' need to go through solid materials such as concrete, the signal strength is decreased. This means that the "predefined distance" is reduced.

The predefined distance may be 50-100m. If the user carrying the receiver members (smartphones) 8, 8' of the system 2 are in a building site and use physical objects (e.g. working tools) provided with transmitter members 4, the receiver members (smartphones) 8, 8' will scan for signals transmitted by the transmitter members 4 within a range of 50-100m.

Accordingly, the receiver members (smartphones) 8, 8' can forward information (data including the MAC Addresses as well as the time when and the position where the signals 6, 6' were received) to a main receiver 14 which may be a server placed in the company that owns the physical objects 10.

The receiver 8, 8' may preferably be configured to regularly scan for received signals 6, 6'. The signals and the communications protocol may be of any suitable type. It may be an advantage to apply a technology having low energy consumption. It is possible to apply "Bluetooth low energy" also called "Bluetooth Smart".

Once the required software (applications or APPs) is installed in the receiver members 8, 8', and the applied transmitter members 4 are defined in the system 2, no further installation is required. Accordingly, no pairing is required unlike several known solutions.

By analysing the signal strength, it is possible to estimate the distance d₁ and d₂ between the transmitter members 4 and the receiver members 8, 8'. Accordingly, it is possible to identify the individuals (the receiver members 8, 8' and thus the users of the system 2) who are in proximity to the applied transmitter members 4, and the individuals ( receiver members 8, 8' and thus the users of the system 2) who have been in proximity to the applied transmitter members 4.

Fig. 2 illustrates a schematic view of a system 2 according to the invention. A first individual (user) carries a first mobile phone 8, and a second individual (user) carries a second mobile phone 8'. The first main receiver 14 has access to information 19 sent by the first mobile phone 8 as a signal 16, whereas the second main receiver 14' has access to information 19' sent by the first mobile phone 8 as a signal 16 and by the second mobile phone 8' as a signal 16'.

The mobile phone 8 of the first individual is in close proximity to a drilling machine 10 provided with a transmitter member 4 and an angle grinder 10' provided with a transmitter member 4'.

These transmitter members 4, 4' transmit signals 6, 6'. These signals 6, 6' are received by the first mobile phone 8. The first mobile phone 8 forwards data containing information that identifies the tools 10, 10'. The data further contains information about when (time) and where (position) the signals 6, 6' were received by the phone 8. Since the first mobile phone 8 is a receiver member 8 allocated to the main receiver and since the transmitter members 4, 4' are transmitter members 4, 4' allocated to the first main receiver 14, the first main receiver 14 has access to data containing information about when (time) and where (position) the signals 6, 6' were received by the phone 8. Access to this information may be gained via the Internet 12. Accordingly, the first main receiver 14 can access a server and see this information through the Internet 12. The first mobile phone 8 and the second mobile phone 8' send information wirelessly via the Internet 12.

The mobile phone 8' of the second individual is in close proximity to a drilling machine 10"' provided with a transmitter member 4"' and a pipe wrench 10" provided with a transmitter member 4".

These transmitter members 4", 4"' transmit signals 6", 6"' that are received by the second mobile phone 8'. The second mobile phone 8' forwards data containing information that can identify the tools 10", 10"'. The data further contains information about when (time) and where (position) the signals 6", 6"' were received by the phone 8'. As both the first mobile phone 8 and the second mobile phone 8' are receiver members 8, 8' allocated to the second main receiver 14', and since the transmitter members 4, 4', 4", 4"' are transmitter members 4, 4', 4", 4"' allocated to the second main receiver 14', the second main receiver 14' has access to data containing information about when (time) and where (position) all the signals 6, 6', 6", 6'" were received by any of the phones 8, 8'. Therefore, the second main receiver 14' can access a server and see all this information through the Internet 12.

The system 2 may be configured to give each user (carrying one of the mobile phones 8, 8') access to see at least a selection of the information 19, 19' that the first main receiver 14 and/or the second main receiver 14' can see. The system 2 may be configured to give each user (carrying one of the mobile phones 8, 8') access to see all the information 19, 19' that the first main receiver 14 and/or the second main receiver 14' can see.

The system 2 makes it possible to have access to all information related to all transmitter members 4, 4', 4", 4"' allocated to a main receiver and receiver members 8, 8' allocated to a main receiver. If the company has a large number of users of the system 2, this feature is a major advantage.

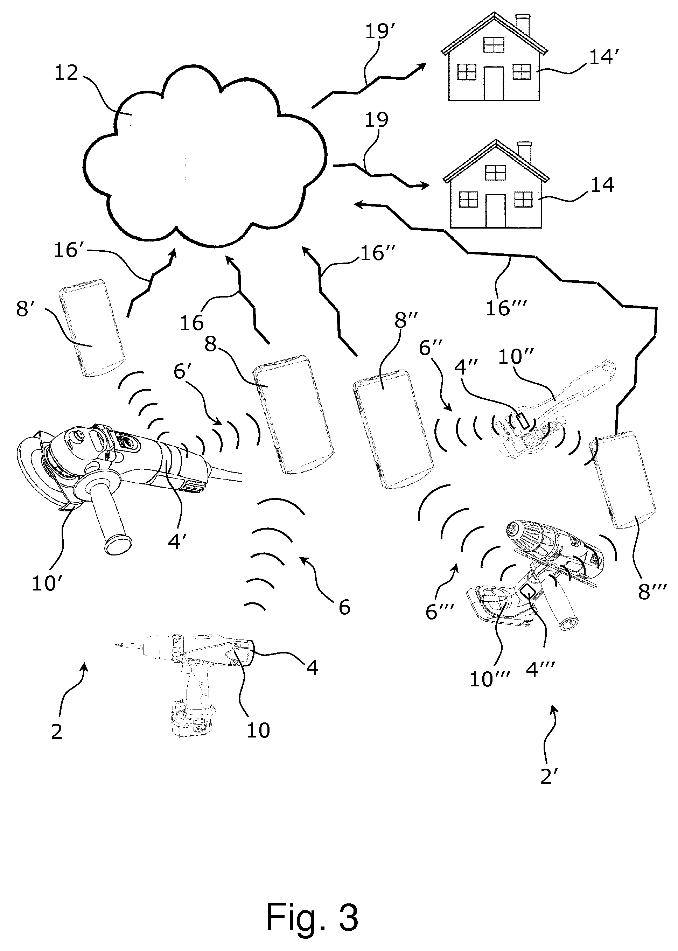

Fig. 3 illustrates a schematic view of two systems 2, 2' according to the invention. The first system 2 comprises a first individual (user) who carries a first mobile phone 8 and a second individual (user) who carries a second mobile phone 8'. The second system 2' comprises a third individual (user) who carries a third mobile phone 8" and a fourth individual (user) who carries a fourth mobile phone 8"'.

A first main receiver 14 of the first system 2 has access to information 19 sent by the first mobile phone 8 as a signal 16 and sent by the second mobile phone 8' as a signal 16'.

A second main receiver 14' of the first system 2 has access to information 19' sent by the third mobile phone 8" as a signal 16" and sent by the fourth mobile phone 8"' as a signal 16"'.

The mobile phone 8 and the second mobile phone 8' are in close proximity to a drilling machine 10 provided with a transmitter member 4 and an angle grinder 10' provided with a transmitter member 4'.

These transmitter members 4, 4' transmit signals 6, 6'. The signals 6, 6' are received by the first mobile phone 8 and/or by the second mobile phone 8'. The first mobile phone 8 and the second mobile phone 8' forward data containing information that identifies the tools 10, 10'. The data further contains information about when (time) and where (position) the signals 6, 6' were received by the phone 8 or by the second mobile phone 8'.

The first mobile phone 8 and the second mobile phone 8' are receiver members 8, 8 allocated to the first main receiver 14 and the transmitter members 4, 4' are transmitter members 4, 4' allocated to the first main receiver 14. Accordingly, the first main receiver 14 has access to data containing information about when (time) and where (position) the signals 6, 6' were received by the first phone 8 and by the second phone 8'. The first main receiver 14 can access a server and see this information through the Internet 12. The first mobile phone 8 and the second mobile phone 8' may have access to the same data at least a portion of these data through a wireless connection to a server that holds the data.

The third mobile phone 8" and the fourth mobile phone 8"' are in close proximity to a drilling machine 10'" provided with a transmitter member 4'" and a pipe wrench 10" provided with a transmitter member 4".

These transmitter members 4", 4"' transmit signals 6", 6"' that are received by the third mobile phone 8" and/or by the fourth mobile phone 8"'. The third mobile phone 8" and the fourth mobile phone 8"' forward data containing information that can identify the tools 10", 10"'. This data contains information about when (time) and where (position) the signals 6", 6'" were received by the third mobile phone 8" and/or by the fourth mobile phone 8"'.

The third mobile phone 8" and the fourth mobile phone 8"' are members 8", 8"' allocated to the second main receiver 14' and the transmitter members 4", 4"' are transmitter members 4", 4"' allocated to the second main receiver 14'. Accordingly, the second main receiver 14' has access to data containing information about when (time) and where (position) all the signals 6", 6"' were received by any of the phones 8", 8"'. The second main receiver 14' can access a server and see all this information through the Internet 12.

It can be seen that the system 2 may be configured to give each relevant user (carrying one of the mobile phones 8, 8') access to see at least a selection of the information 19 that the first main receiver can see. The system 2 may be configured to give each user (carrying one of the mobile phones 8, 8') access to see all the information 19 that the first main receiver 14 can see. Similarly, the system 2 may be configured to give each relevant user (carrying one of the mobile phones 8", 8"') access to see at least a selection of the information 19' that the second main receiver can see. The system 2 may be configured to give each relevant user (carrying one of the mobile phones 8", 8"') access to see all the information 19' that the second main receiver 14' can see.

The system 2 makes it possible for the first main receiver 14 to have access to all information related to all transmitter members 4, 4' and receiver members 8, 8' allocated to the first main receiver 14 and makes it possible for the second main receiver 14' to have access to all information related to all transmitter members 4", 4"' and receiver members 8", 8"' allocated to the second main receiver 14'. In case a company has a large number of users of the system 2, this feature is a major advantage.

It is important to underline that the two systems 2, 2' do not interfere with one another in a negative manner. Since the transmitter members 4, 4' of the first system 2 are registered and thus known in the first system 2 and not in the second system 2', the signals 6, 6' received by the first phone 8 and by the second phone 8' can only be accessed by the first main user 14. In case the third phone 8" and/or the fourth phone 8" receive(s) the signals 6, 6' transmitted by the transmitter members 4, 4', the systems 2, 2' will receive and store the information regarding where and when the signals 6, 6' were received. However, information about where and when the signals 6, 6' were received can only be accessed by the first main receiver 14, since the transmitter members 4, 4' are transmitter members 4, 4' allocated to the first main receiver 14 and not the second main receiver 14'.

Since the transmitter members 4', 4" of the second system 2' are registered and thus known in the second system 2' and not in the first system 2, the signals 6", 6"' received by the third phone 8" and by the fourth phone 8"' can only be accessed by the second main user 14'. In case the first phone 8 and/or second phone 8' receive(s) the signals 6", 6"' transmitted by the transmitter members 4", 4"', the systems 2, 2' will receive and store the information regarding where and when the signals 6", 6'" were received. However, information about where and when the signals 6", 6"' were received can only be accessed by the second main receiver 14', since the transmitter members 4", 4"' are transmitter members 4", 4"' allocated to to the second main receiver 14' and not the first main receiver 14.

The users of the systems 2, 2' do not have to do anything in order to prevent negative interference between the systems once the transmitter members 4, 4', 4", 4"' and the receiver members 8, 8', 8", 8"' have been registered/defined in the systems 2, 2'. Accordingly, there is no risk of experiencing negative interference between the two systems 2, 2', not even if the physical objects 10, 10', 10", 10'" and the receiver members 8, 8', 8", 8'" of the two systems are within a short range e.g. in a construction site.

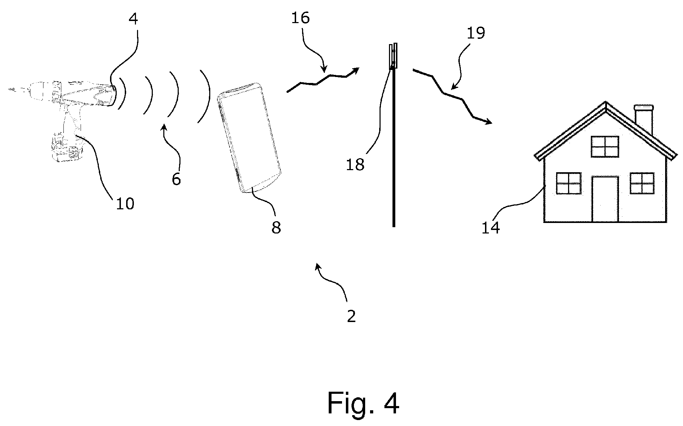

Fig. 4 illustrates a schematic view of a system 2 according to the invention. Fig. 4 exemplifies how data/information can reach the main receiver 14. In Fig. 4, a drilling machine 10 is provided with a transmitter member 4 configured to transmit signals 6 to a mobile phone 8 that is adapted to receive the signals 6 transmitted by the transmitter member 4 of the drilling machine 10. Accordingly, the mobile phone 8 receives a signal (data/information) containing information about the MAC address of the drilling machine 10. The signal may comprise information about the battery status of the transmitter member 4 so that the user of the drilling machine 10 is informed when it is time to replace the battery/the transmitter member 4.

In order to reduce or minimise the energy consumption of the transmitter member 4, it is possible to transmit data in sequences separated by non-transmitting periods. In order to further reduce the energy consumption, the mobile phone 8 may be configured to scan for signals 6 in scanning periods separated by non-scanning periods. Hereby, the power consumption of the mobile phone 8 can be reduced.

The mobile phone 8 wirelessly transmits data 16 to a mobile tower 18. The mobile tower 18 forwards data 16" to a main receiver 14 which may be a company that owns and uses a number of tools including the drilling machine 10.

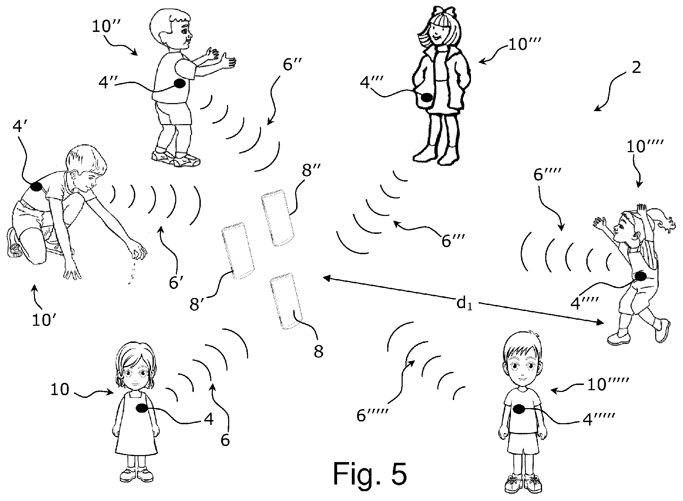

Fig. 5 illustrates a schematic view of a system 2 according to the invention which can be used to keep track of children 10, 10', 10", 10"', 10"", 10""' in a childcare centre. All the children 10, 10', 10", 10"', 10"", 10""" are provided with a transmitter member 4, 4', 4", 4"', 4"", 4'"" configured to periodically transmit a wireless signal 6, 6', 6", 6"', 6"", 6""'. Hereby, the personnel's receiving members 8, 8', 8" receive information indicating that the children 10, 10', 10", 10"', 10"", 10""" are within a predefined distance d₁ (e.g. within a radius of 100m).

The system 2 is preferably configured in such a manner that an alert is generated by at least one of the mobile phones 8, 8', 8" or another deviceif the distance d₁ between one of the children 10, 10', 10", 10"', 10"", 10""' and one of the mobile phones 8, 8', 8" exceeds a predefined level (e.g. 100m) or if one of the mobile phones 8, 8', 8" no longer receive signals 6, 6', 6", 6"', 6"", 6""' from one or more of the children 10, 10', 10", 10"', 10"", 10""',. It may be an advantage that an alert is generated by all the mobile phones 8, 8', 8". The alert may alternatively or additionally be generated at a server receiving signals transmitted from the mobile phones 8, 8', 8" or at the main receiver.

The alert may preferably be generated by means of the mobile phones 8, 8', 8". Software (e.g. an application or APP) enabling the mobile phones 8, 8', 8" to check if the distance d₁ between one of the children 10, 10', 10", 10"', 10"", 10""" and the respective mobile phone 8, 8', 8" exceeds a predefined level (e.g. 100m) or if the respective mobile phone 8, 8', 8" no longer receives signals 6, 6', 6", 6'", 6"", 6""' from one or more of the children 10, 10', 10", 10"', 10"", 10""" may be installed in the mobile phones 8, 8', 8". The distance d₁ between one of the children 10, 10', 10", 10'", 10"", 10""' and the respective mobile phone 8, 8', 8" may be estimated/determined by the signal strength of the signals 6, 6', 6", 6"', 6"", 6""'.

The system 2 may be configured to generate an alert if the signal strength of at least one of the signals 6, 6', 6", 6'", 6"", 6'"" is below a predefined level (e.g. 80 or 120 m). It may be an advantage that the system 2 is configured in such a manner that the predefined level can be changed.

The mobile phones 8, 8', 8" may preferably be carried by a supervising staff member. The system 2 illustrated in Fig. 5 may be applied for supervision of elderly people in a care home. The system 2 illustrated in Fig. 5 may alternatively be used to supervise children in a school or in an after-school care.

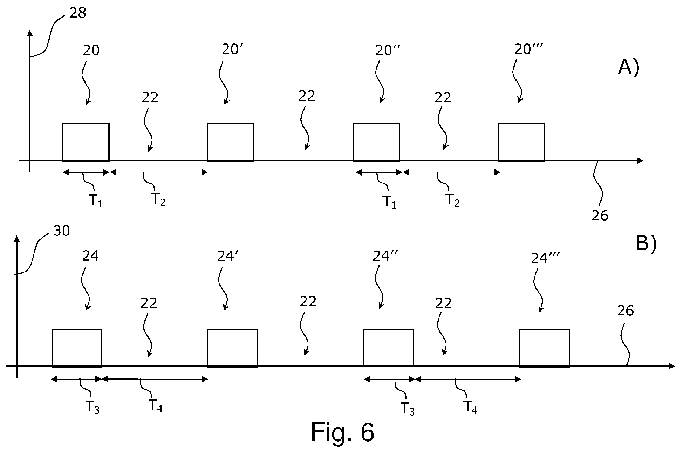

Fig. 6A illustrates a schematic, graphical view of the sending activity 28 of a transmitter member as function of time 26. Fig. 6A shows that a number of data packages 20, 20', 20", 20'" separated by pauses/breaks 22 of equal duration T₂ are transmitted. The duration T₁ of the sending activity 26 during transmission of each data package 20, 20', 20", 20'" is shorter than the duration T₂ of the pauses/breaks 22 between the data packages 20, 20', 20", 201".

Hereby, it is possible to reduce the energy consumption of the transmitter members since no energy is used for transmission of data packages 20, 20', 20", 20'" in the pauses/breaks 22.

It is important to underline that Fig. 6A is a schematic illustration only and that the relationship between the duration T₁ of the sending activity 26 during transmission of each data package 20, 20', 20", 20'" and the duration T₂ of the pauses/breaks 22 between the data packages 20, 20', 20", 20'" does not necessarily correspond to the real-life relationship between the durations T₁, T₂. It is possible to extend the duration T₂ of the pauses/breaks 22 between the data packages 20, 20', 20", 20'" even further in order to reduce the energy consumption even more.

Fig. 6B illustrates a schematic, graphical view of the scanning activity 30 of a receiver member as function of time 26. Fig. 6B shows a plurality of scanning periods 24, 24', 24", 24"' separated by pauses/breaks 22 of equal duration/length T₄. The duration T₃ of the scanning periods 24, 24', 24", 24'" is indicated in Fig. 6B. It can be seen that the duration T₃ of the scanning periods 24, 24', 24", 24"' is shorter than the duration T₄ of the pauses/breaks 22 between the scanning periods 24, 24', 24", 24"'.

It is important to note that Fig. 6B is a schematic illustration only and that the relationship between the duration T₃ of the scanning periods 24, 24', 24", 24'" and the duration T₄ of the pauses/breaks 22 between the scanning periods 24, 24', 24", 24"' may be different from what is shown in Fig. 6B. It is possible to extend the duration T₄ of the pauses/breaks 22 between the scanning periods 24, 24', 24", 24"' in order to reduce the energy consumption.

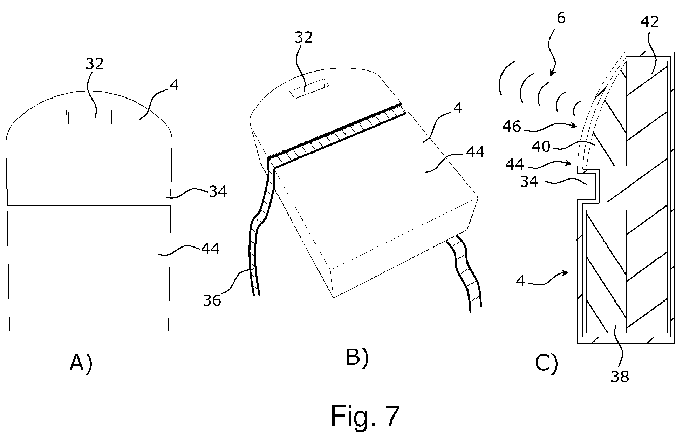

Fig. 7A illustrates a schematic front view of a transmitter member 4 according to the invention. A through-going bore 32 is provided in the transmitter member 4. Hereby, the transmitter member 4 can be attached to an object or a person by putting a string, chain or a key ring through the through-going bore 32. The transmitter member 4 is provided with a recess 34 extending along the width of the front surface 44 of the transmitter member 4. The transmitter member 4 is basically box-shaped. However, the transmitter member comprises a top portion provided with the through-going bore 32.

Fig. 7B illustrates a schematic perspective view of the transmitter member 4 shown in Fig. 7A. The transmitter member 4 comprises a through-going bore 32 and a recess in which a strap 32 for attaching the transmitter member 4 to an object or a person is arranged. The recess extends along the front surface 44. The through-going bore 32 is provided centrally at the top portion of the transmitter member 4. The strap 36 may be replaced by a hose clamp, a string, a rubber band or a chain.

Fig. 7C illustrates a schematic cross-sectional view of a transmitter member 4 according to the invention. The transmitter member 4 basically corresponds to the one shown in Fig. 7A and in Fig. 7B. The transmitter member 4, however, has a top portion comprising a rounded portion 46 provided in the front section of the top portion of the transmitter member 4.

The transmitter member 4 comprises a battery 38 that is electrically connected to a printed circuit board 42 having an integrated transmitter unit 40 comprising a radio unit and an antenna for transmission of wireless radio signals 6.

It can be seen that a recess 34 adapted for attachment of the transmitter member 4 to an object or a person is provided in the front surface 44.

The transmitter member 4 is configured to send so-called "advertisement packages" 6.

It may be an advantage that the transmitter member 4 applies the so-called "Beacon technology" configured to broadcast the identifier of the transmitter member 4 to nearby electronic devices. The transmitter member 4 may be a Bluetooth 4.0 device using the Bluetooth Smart technology for transmitting signals 6 to the nearby smartphones or other nearby electronic receiver members (e.g. "Bluetooth Smart Ready" devices).

The wireless Beacon device of the transmitter member 4 estimates the position of the smartphones or the other electronic receiver members on the basis of the signals 6. Hereafter, wireless signals/data 6 is transmitted to the smartphones or the other electronic receiver members.

These data may be received and processed by the smartphone or the other electronic receiver members provided that software (an application or APP) for this purpose has been installed. It is required that the smartphones or the other electronic receiver members support the so-called "Bluetooth Smart Ready" technology.

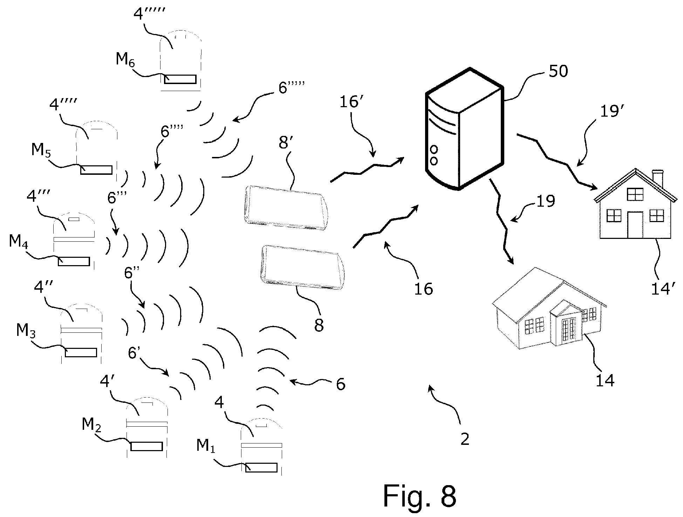

Fig. 8 schematically illustrates how data is sorted during data processing carried out by a server 50. The system 2 comprises a first receiver member 8 and a second receiver member 8' both formed as mobile phones 8, 8' configured to receive wireless signals (data) 6, 6', 6", 6"', 6"", 6""' transmitted by six transmitter members 4, 4', 4", 4"', 4"", 4""'. The transmitter members 4, 4', 4", 4"', 4"", 4""' are shown as separate devices. In practice, though, the transmitter members 4, 4', 4", 4"', 4"", 4""' will be attached to an object or a person or an animal. The transmitter members 4, 4', 4", 4"', 4"", 4""' will typically be permanently or detachably attached to the corresponding objects or persons as illustrated in Fig. 1, Fig. 2, Fig. 3 or Fig. 4.

Each transmitter member 4, 4', 4", 4"', 4"", 4""' transmits a wireless signal 6, 6', 6", 6"', 6"", 6""' each containing the MAC address of the transmitter member 4, 4', 4", 4"', 4"", 4""'. Accordingly, the MAC address is used as a unique identification number that is registered in a server 50.

The mobile phones 8, 8' regularly scan for data to receive from the nearby transmitter members 4, 4', 4", 4"', 4"", 4""'. The mobile phones 8, 8' receive the signals 6, 6', 6", 6"', 6"", 6""' including the MAC addresses M₁, M₂, M₃, M₄, M₅, M₆ of each of the transmitter members 4, 4', 4", 4"', 4"", 4""'. The received data are registered together with the time of the data receipt and the positions of the mobile phones during the data receipt.

Hereafter, the mobile phones 8, 8' transmit signals 16, 16' (containing the data received by the mobile phones 8, 8', the time and the position of the receiver members 8, 8' 4 when the receiver members 8, 8' received signals 6, 6', 6", 6'", 6"", 6""'). The wireless signals 16, 16' are received by the server 50. The server 50 is configured to sort the received data in such a manner that only the data which is linked to the transmitter members 4, 4', 4", 4"', 4"", 4""' that are known and registered in the system 2 can be accessed by the corresponding main receiver 14, 14' by means of a data transmission 19, 19'.

The main receiver 14, 14' can access the data by logging into a web page and hereby have access to data related to the transmitter members that are registered in the system 2 and linked to the respective main receiver 14, 14'.

Fig. 8 illustrates a system 2 having a first main receiver 14 and a second main receiver 14' which may have access to different sets of transmitter members 4, 4', 4", 4'", 4"", 4""'. In one embodiment of the invention, a first main receiver 14 has access to see data related to the transmitter members 4, 4', 4". A second main receiver 14' has access to all transmitter members 4, 4', 4", 4"', 4"", 4""'. Accordingly, the server 50 will provide the first main receiver 14 with access to the three transmitter members 4, 4', 4"whereas the second main receiver 14' will be provided with access to all transmitter members 4, 4', 4", 4'", 4"", 4'"".

In another embodiment according to the invention, a first main receiver 14 may have access to see data related to the transmitter members 4, 4', 4". A second main receiver 14' has access to the remaining transmitter members 4"', 4"", 4""'. Accordingly, the server 50 will provide the first main receiver 14 with access to the three transmitter members 4, 4', 4" whereas the second main receiver 14' will be provided with access to the three remaining transmitter members 4"', 4"", 4""'. Accordingly, the invention makes it possible to sort the data 16, 16' received by the server in order to provide the main receivers 14, 14' with access to user specific data 19, 19'. Accordingly, the invention makes it possible to see all relevant data from all transmitter members 4, 4', 4", 4"', 4"", 4'"" of a receiver member 14, 14' in an easy manner. At the same time, the invention makes it possible to prevent receiver members 14, 14' from having access to non-related transmitter members 4, 4', 4", 4"', 4"", 4""' (transmitter members that are linked to other receiver members).

It is possible to access the server data by using a computer or a tablet via an Internet connection to the server 50. It will also be possible to access data on the server 50 via smartphones 8, 8', wherein dedicated software (an application or APP) is installed on the smartphones 8, 8'. This software may also be used when the smartphones 8, 8' scan for data from the transmitter members 4, 4', 4", 4"', 4"", 4""'.

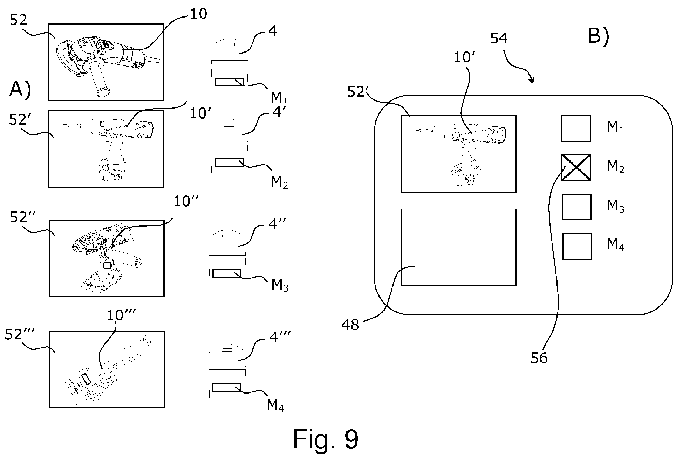

Fig. 9 illustrates how a number of transmitter members 4, 4', 4", 4"' are linked to physical objects 10, 10', 10", 10"'. The registration procedure is carried out in a manner in which a picture of each of the physical objects 10, 10', 10", 10'" is taken and linked/paired to the corresponding transmitter member 4, 4', 4", 4"'. Fig. 9 shows four pictures 52, 52', 52", 52'" of the four physical objects 10, 10', 10", 10'" that are to be linked to the corresponding transmitter members 4, 4', 4", 4"' having the MAC addresses M₁, M₂, M₃, M₄. It is important to underline that it is not necessary to take a picture of each physical object 10, 10', 10", 10"'. Therefore, the system 2 according to the invention can function without (access to) pictures of the physical object 10, 10', 10", 10"'.

Fig. 9B illustrates how the transmitter members and physical objects 10, 10', 10", 10'" shown in Fig. 9A are linked/paired in a system according to the invention. Fig. 9B illustrates a screen display 54 of a web page, wherein the user(s) of the system has uploaded a picture 52' of a drilling machine 10'. In the text box 48 below the picture 52', it is possible to add a comment or a description of the physical object 10' (in this case a drilling machine).

In the right side of the picture 10', a list of all selectable MAC addresses M₁, M₂, M₃, M₄ is shown. The user(s) of the system select(s) the MAC address M₂. Accordingly, this MAC address M₂ is being linked/paired to the drilling machine 10'.

Correspondingly, it is possible for the user(s) to register (link/pair) the other physical objects 10', 10", 10"' in the system with the remaining MAC addresses M₁, M₃, M₄ attached to the transmitter members 4, 4", 4"' for linking the MAC addresses M₁, M₃, M₄ to the physical objects 10, 10", 10"'.

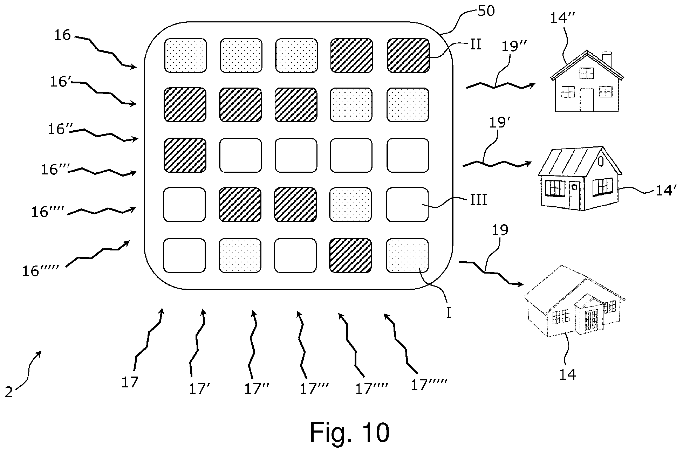

Fig. 10 illustrates a schematic view of how received data 16, 16', 16", 16"', 16"", 16""', 17, 17', 17", 17"', 17"", 17""' is sorted to different main receivers 14, 14', 14" during data processing carried out by a server 50. The system 2 comprises a central server 50 configured to receive and store data 16, 16', 16", 16"', 16"", 16""', 17, 17', 17", 17"', 17"", 17""' transmitted by receiver members (not shown).

As illustrated in Fig. 10, the server 50 is capable of sorting the received data 16, 16', 16", 16"', 16"", 16""', 17, 17', 17", 17"', 17"", 17""' into groups corresponding to the main receivers 14, 14', 14". The received data 16, 16', 16", 16"', 16"", 16""', 17, 17', 17", 17"', 17"", 17""' is divided into three groups: a first group comprising data indicated as boxes I with small dots, a second group comprising data indicated as boxes II with inclined lines and a third group comprising data indicated as clean white boxes III.

The server 50 sorts the received data 16, 16', 16", 16"', 16"", 16""', 17, 17', 17", 17"', 17"", 17""' in such a manner that the first group comprising data indicated as boxes I with small dots is accessible for the first main receiver 14. This is indicated with the first data transfer arrow 19. The server 50 further sorts the received data 16, 16', 16", 16"', 16"", 16""', 17, 17', 17", 17"', 17"", 17""' in such a manner that the second group comprising data indicated as boxes II with inclined lines is accessible for the second main receiver 14' as indicated by the data transfer arrow 19'. Correspondingly, the server 50 sorts the received data 16, 16', 16", 16"', 16"", 16""', 17, 17', 17", 17"', 17"", 17""' in such a manner that the third group comprising data indicated as clean white boxes III is accessible for the third main receiver 14". This is indicated by the data transfer arrow 19".

Accordingly, the system 2 is capable of providing a main receiver 14, 14', 14" with access to all data that is linked to the receiver 14, 14', 14". By using this access, the main receiver 14, 14', 14" is capable of seeing all relevant data at the same time. In case the main receiver 14, 14', 14" is linked to a large number of transmitter members this feature is a major advantage. Access to the server data may also be gained through one of the receiver members (smartphones) of the system provided that access is permitted.

### List of reference numerals

- 2, 2': System
- 4, 4', 4", 4"', 4"", 4""': Transmitter member
- 6, 6', 6", 6"', 6"", 6"'": Signal
- 8, 8', 8": Receiver member
- 10, 10', 10", 10"', 10"", 10""": Object
- 12: Internet
- 14, 14', 14": Main receiver
- 16, 16', 16", 16"', 16"", 16""': Signal
- 17, 17', 17", 17"', 17"", 17""': Signal
- 18: Mobil tower
- 19, 19', 19": Signal
- 20, 20', 20", 20'": Data package
- 22: Pause
- 24, 24', 24", 24'": Scanning period
- 26: Time
- 28: Transmission activity
- 30: Scanning activity
- 32: Through-going bore
- 34: Groove
- 36: Strap
- 38: Battery
- 40: Transmitter unit
- 42: Printed circuit board
- 44: Front surface
- 46: Rounded portion
- d₁, d₂: Distance
- T₁, T₂, T₃, T₄: Duration
- I, II, III: Box
- 48: Text box
- 50: Server
- M₁, M₂ M₃, M₄, M₅, M₆: MAC address
- 52, 52', 52", 52'": Scanned picture
- 54: Screen display

## Claims

1. A system (2, 2') for identification and localisation of physical objects (10, 10', 10", 10"', 10"", 10""'), including the geographic position of the physical objects (10, 10', 10", 10"', 10"", 10""'), wherein the system (2, 2') comprises a plurality of transmitter members (4, 4', 4", 4"', 4"", 4""') integrated in or configured to be attached to the physical objects (10, 10', 10", 10"', 10"", 10'""), wherein the transmitter members (4, 4', 4", 4"', 4"", 4""') are configured to transmit wireless signals (6, 6', 6", 6"') comprising information about the transmitter members (4, 4', 4", 4'", 4"", 4""'), wherein the system (2, 2') comprises a plurality of receiver members (8, 8') configured to receive the wireless signals (6, 6', 6", 6"') transmitted by the transmitter members (4, 4', 4", 4'", 4"", 4'""), wherein the receiver members (8, 8') are configured to forward the received wireless signals (6, 6', 6", 6"') directly or indirectly to a main receiver (14, 14', 14"), wherein the transmitter members (4, 4', 4", 4"', 4"", 4""') regularly transmit wireless signals (6, 6', 6", 6"') to the receiver members (8, 8') and the receiver members (8, 8') regularly transmit directly or indirectly to the main receiver (14, 14'), wherein the data (16, 16') transmitted by the receiver members (8, 8') contain information about where and when the wireless signals (6, 6', 6", 6"', 20', 20", 20"') are received by the receiver members (8, 8'), **characterised in that** the system (2, 2') is configured to allow the main receiver (14, 14', 14") to access the data of all the transmitter members (4, 4', 4", 4'", 4"", 4""') allocated to the main receiver (14, 14') and receiver members (8, 8') allocated to the main receiver (14, 14') in such a manner that the main receiver (14, 14') has access to the time and position history of the transmitter members (4, 4', 4", 4'", 4"", 4""') allocated to the main receiver (14, 14') and receiver members (8, 8') allocated to the main receiver (14, 14').

2. A system (2, 2') according to claim 1, **characterised in that** the receiver members (8, 8') are configured to forward the received wireless signals (6, 6', 6", 6"') directly and indirectly to a main receiver (14, 14').

3. A system (2, 2') according to claim 1 or claim 2, **characterised in that** the system is configured to change the number of transmitter members (4, 4', 4", 4"', 4"", 4""') allocated to the main receiver (14, 14') and receiver members (8, 8') allocated to the main receiver (14, 14') of the system by adding or removing transmitter members (4, 4', 4", 4"', 4"", 4""') and/or adding or removing receiver members (8, 8') allocated to the main receiver (14, 14').

4. A system (2, 2') according to one of the preceding claims, **characterised in that** the receiver members (8, 8') are configured to forward the received wireless signals (6, 6', 6", 6"') directly and indirectly to a main receiver (14, 14') being a receiver member (8, 8').

5. A system (2, 2') according to one of the preceding claims, **characterised in that** the receiver members (8, 8', 8") are configured to scan for signals (6, 6', 6", 6"') transmitted by the transmitting members (4, 4', 4", 4"', 4"", 4""') and that the receiver members (8, 8', 8") are configured to continue this automatic scanning procedure.

6. A system (2, 2') according to one of the preceding claims, **characterised in that** the system (2, 2') is configured to identify if one or more of the receiver members (8, 8', 8") are within a predefined distance (d₁, d₂) from the transmitter members (4, 4', 4", 4"', 4"", 4""').

7. A system (2, 2') according to one of the preceding claims, **characterised in that** the system (2, 2') is configured to generate an alert if one or more of the receiver members (8, 8', 8") are within a predefined distance (d₁, d₂) from the transmitter members (4, 4', 4", 4'", 4"", 4""') and/or that the signal strength of the received signals (6, 6', 6", 6"') transmitted by the transmitting members (4, 4', 4", 4"', 4"", 4""') is within a predefined range.

8. A system (2, 2') according to one of the preceding claims, **characterised in that** the system (2, 2') is configured to identify if several of the receiver members (8, 8', 8") are simultaneously within a predefined distance (d₁, d₂) from the transmitter members (4, 4', 4", 4"', 4"", 4""') or if the signal strength of the transmitted signals (6, 6', 6") is within a predefined range.

9. A system (2, 2') according to one of the preceding claims, **characterised in that** the system (2, 2') is configured to save data (16, 16', 16", 16"') and thereby identify the receiver members (8, 8', 8") that have recently been near the transmitter members (4, 4', 4", 4"', 4"", 4""').

10. A system (2, 2') according to one of the preceding claims, **characterised in that** the system (2, 2') is configured to add and/or remove receiver members (8, 8', 8") and/or transmitter members (4, 4', 4", 4"', 4"", 4""') and/or main receivers (14, 14', 14").

11. A system (2, 2') according to one of the preceding claims, **characterised in that** the receiver members (8, 8', 8") comprise a satellite-based navigation and positioning system receiver (GPS receiver) for determining the position of the receiver members (8, 8', 8").

12. A system (2, 2') according to one of the preceding claims, **characterised in that** the system (2, 2') does not require the transmitter members (4, 4', 4", 4"', 4"", 4""') and the receiver members (8, 8', 8") to be paired.

13. A system (2, 2') according to one of the preceding claims, **characterised in that** each transmitter member (4, 4', 4", 4"', 4"", 4""') comprises a unique identification code corresponding to the MAC address of the transmitter member (4, 4', 4", 4"', 4"", 4""').

14. A method for identification and localisation of physical objects (10, 10', 10", 10'", 10"", 10""'), including the geographic position of the physical objects (10, 10', 10", 10"', 10"", 10""'), wherein the method applies a plurality of transmitter members (4, 4', 4", 4"', 4"", 4""') integrated in or configured to be attached to the physical objects (10, 10', 10", 10"', 10"", 10'""), wherein the transmitter members (4, 4', 4", 4"', 4"", 4""') are configured to transmit wireless signals (6, 6', 6", 6"') comprising information about the transmitter members (4, 4', 4", 4'", 4"", 4'""), wherein the method applies a plurality of receiver members (8, 8') configured to receive the wireless signals (6, 6', 6", 6"') transmitted by the transmitter members (4, 4', 4", 4'", 4"", 4'""), wherein the receiver members (8, 8') are configured to forward the received wireless signals (6, 6', 6", 6"') directly or indirectly to a main receiver (14, 14', 14"), wherein the transmitter members (4, 4', 4", 4"', 4"", 4""') regularly transmit wireless signals (6, 6', 6", 6"') to the receiver members (8, 8') and the receiver members (8, 8') regularly transmit directly or indirectly to the main receiver (14, 14'), wherein the data (16, 16') transmitted by the receiver members (8, 8') contain information about where and when the wireless signals (6, 6', 6", 6"', 20', 20", 20"') are received by the receiver members (8, 8'), wherein the method provides a main receiver (14, 14', 14") to access the data of all the transmitter members (4, 4', 4", 4"', 4"", 4""') allocated to the main receiver (14, 14') and the receiver members (8, 8') allocated to the main receiver (14, 14') in such a manner that the main receiver (14, 14') has access to the time and position history of the transmitter members (4, 4', 4", 4"', 4"", 4""') allocated to the main receiver (14, 14') and receiver members (8, 8') allocated to the main receiver (14, 14').
